(19) Europäisches Patentamt / European Patent Office / Office européen des brevets

(11) **EP 3 769 077 B1**

(12) **FASCICULE DE BREVET EUROPEEN**

(45) Date de publication et mention de la délivrance du brevet:
**02.03.2022 Bulletin 2022/09**

(21) Numéro de dépôt: **19715172.3**

(22) Date de dépôt: **13.03.2019**

(51) Classification Internationale des Brevets (IPC):
**G01N 29/04** *(2006.01)*   **G01B 17/04** *(2006.01)*
**G01N 29/22** *(2006.01)*   **G01N 29/26** *(2006.01)*
**G01N 29/265** *(2006.01)*

(52) Classification Coopérative des Brevets (CPC):
**G01N 29/262; G01N 29/225; G01N 29/265;**
G01N 2291/106

(86) Numéro de dépôt international:
**PCT/FR2019/050541**

(87) Numéro de publication internationale:
**WO 2019/180347 (26.09.2019 Gazette 2019/39)**

(54) **PROCEDE ET DISPOSITIF DE CARTOGRAPHIE DE PIECES POUR DETECTION DE DIRECTION D'ALLONGEMENT**

VERFAHREN UND VORRICHTUNG ZUR ABBILDUNG VON KOMPONENTEN ZUR DETEKTION DER DEHNUNGSRICHTUNG

METHOD AND DEVICE FOR MAPPING COMPONENTS FOR DETECTING ELONGATION DIRECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1852461**

(43) Date de publication de la demande:
**27.01.2021 Bulletin 2021/04**

(73) Titulaires:
• **SAFRAN**
  **75015 Paris (FR)**
• **Centre national de la recherche scientifique**
  **75016 Paris (FR)**

(72) Inventeurs:
• **BAELDE, Aurélien**
  **77550 MOISSY-CRAMAYEL (FR)**
• **JENSON, Frédéric**
  **77550 MOISSY-CRAMAYEL (FR)**
• **PRADA, Claire**
  **77550 MOISSY-CRAMAYEL (FR)**

(74) Mandataire: **Gevers & Orès**
  **9 rue St Antoine du T**
  **31000 Toulouse (FR)**

(56) Documents cités:
**EP-A1- 2 594 935    JP-A- 2012 247 262**

• **BAELDE AURÉLIEN ET AL.: "Effect of microstructurai elongation on backscattered field : Intensity measurement and multiple scattering estimation with a liner transducer array", ULTRASONICS, vol. 82, 2012, pages 379-389, XP085242304, DOI: 10.1016/j.ultras.2017.09.006 cité dans la demande**

# EP 3 769 077 B1

**Description**

## 1. Domaine technique de l'invention

La présente invention se rapporte au domaine général des transducteurs ultrasonores à éléments multiples. En particulier, la présente invention s'applique à la cartographie et au contrôle non-destructif de pièces comprenant une microstructure allongée.

## 2. Arrière-plan technologique

L'état de la technique comprend notamment le document « Effect of microstructural elongation on backscattered field : Intensity measurement and multiple scattering estimation with a liner transducer array » de BAELDE Aurélien et AL, publié dans ULTRASONICS, vol. 82, 20 septembre 2017, pages 379-389 ; ainsi que les demandes de brevet publiées sous les numéros EP-A1-2 594 935 et JP-A-2012 247262.

Dans le domaine de l'aéronautique, il est important de contrôler l'intégrité de pièces forgées destinées à être montées dans un aéronef, en particulier les pièces tournantes forgées. Ces pièces sont constituées d'un matériau, par exemple du titane ou un alliage de titane, comportant une structure cristalline et une microstructure. Par définition, la structure cristalline d'une pièce définit la structure de cette pièce à une échelle de l'ordre d'un dixième de nanomètre. La microstructure d'une pièce définit la structure de cette pièce à une échelle comprise entre un nanomètre et un centimètre.

La structure cristalline d'une pièce est contrôlée à l'aide de méthodes reposant sur la diffraction d'ondes électromagnétiques, par exemple la diffraction de rayons X. La microstructure d'une pièce est contrôlée à l'aide de méthodes reposant sur la réflexion, sur la diffusion, et/ou sur la rétrodiffusion d'ondes acoustiques, par exemple des ultrasons.

Ainsi, il est connu des procédés de contrôle par ultrasons destinés à détecter des défauts dans une pièce. Un défaut peut comprendre, par exemple, des laminages situés entre deux couches formant la pièce, ou encore des discontinuités surfaciques ou volumiques de ladite pièce. Ces procédés consistent à produire un faisceau ultrasonore en direction d'une pièce à contrôler, et à analyser les signaux réfléchis, diffusés et rétrodiffusés par les défauts situés dans cette pièce.

Cependant, ces procédés et ces dispositifs ne permettent pas de détecter une microstructure allongée se situant dans une pièce à contrôler.

En effet, une pièce à contrôler peut comprendre une ou plusieurs microstructures allongées. C'est le cas notamment de pièces réalisées à partir d'une billette cylindrique en titane ou en alliage de titane. Lors de la réalisation de ces pièces, par exemple lors d'un forgeage, une ou plusieurs microstructures allongées se forment dans ces pièces, correspondant à l'allongement (ou élongation) des grains du matériau polycristallin.

Or, un inconvénient d'une pièce comprenant une microstructure allongée est que, lors d'un contrôle de cette pièce par un faisceau ultrasonore, la rétrodiffusion du faisceau ultrasonore avec cette microstructure allongée produit un bruit, dit bruit de structure. Ce bruit de structure interfère avec les signaux issus de la réflexion, de la diffusion et/ou de la rétrodiffusion du faisceau ultrasonore par les défauts situés dans la pièce, et masque une partie des signaux mesurés lors d'un contrôle de la pièce.

Cet inconvénient est d'autant plus notable lorsque la pièce à contrôler comporte une forme complexe ou une structure interne anisotrope. C'est notamment le cas de pièces de forme axisymétrique, ou de pièces réalisées en matériaux métalliques forgés en titane, ou en alliage de titane.

Pour pallier ces inconvénients, il a été montré que l'amplitude du bruit de structure dépend de la position relative et de l'orientation relative du transducteur ultrasonore utilisé pour contrôler la pièce et que la géométrie des transducteurs ultrasonores connus ne permet pas de détecter avec précision la présence d'une microstructure allongée se situant dans une pièce à contrôler.

Ainsi, une solution proposée a été d'utiliser un transducteur linéaire comprenant une pluralité d'éléments transducteurs émettant une pluralité de faisceaux ultrasonores élémentaires, et de focaliser cette pluralité de faisceaux ultrasonores élémentaires pour former une région focale sur la pièce.

Les transducteurs reçoivent des signaux de bruits de structure de par la rétrodiffusion des faisceaux ultrasonores élémentaires par la microstructure allongée. Ces signaux de bruits de structure sont utilisés pour déterminer une direction d'allongement de la microstructure allongée lorsqu'une amplitude de l'un parmi la pluralité des bruits de structure mesurée est minimale selon différentes positions du transducteur linéaire.

Toutefois, cette solution présente plusieurs inconvénients. Dans un premier temps, la détection de la direction d'allongement n'est pas optimale, car les signaux de bruits de structure ne sont pas forcément interprétables facilement et l'amplitude minimale recherchée peut être difficile à déterminer ou ne pas correspondre de façon précise avec la direction d'allongement.

En outre, la direction d'allongement détectée peut ne pas être correcte car lorsque le transducteur linéaire récupère les signaux de bruit de structure selon un plan du transducteur linéaire, la direction d'allongement déterminée est dans un plan de mesure parallèle à ce plan du transducteur linéaire et correspond ainsi à la projection de la direction d'allongement réelle sur ce plan de mesure.

Enfin, pour aller au-delà du contrôle non destructif, il peut être utile d'obtenir une cartographie complète non destructive des pièces afin d'améliorer la détection de fabrication défectueuse. Une telle cartographie permettrait en effet de connaître l'allongement de la pièce en différents points de la pièce.

Les inventeurs ont ainsi cherché une solution à ces inconvénients.

## 3. Objectifs de l'invention

L'invention vise à pallier au moins certains des inconvénients des procédés de cartographie non destructifs connus.

En particulier, l'invention vise à fournir, dans au moins un mode de réalisation de l'invention, un procédé de cartographie non destructif permettant une meilleure précision de la détermination de la direction d'allongement de la microstructure d'une pièce à contrôler, au niveau d'un ou plusieurs points d'intérêt de la pièce.

L'invention vise aussi à fournir, dans au moins un mode de réalisation, un procédé permettant d'élaborer une cartographie 3D de la direction d'allongement de la microstructure d'une pièce à contrôler au niveau de plusieurs points d'intérêt de la pièce.

L'invention vise aussi à fournir, dans au moins un mode de réalisation, un procédé permettant un contrôle non-destructif de la validité de pièces en fonction de leur direction d'allongement.

L'invention vise aussi à fournir, dans au moins un mode de réalisation de l'invention, un dispositif de cartographie non-destructif mettant en œuvre ce procédé.

## 4. Exposé de l'invention

Pour ce faire, l'invention concerne un procédé de cartographie non-destructif d'une pièce comprenant une microstructure allongée, pour la détermination d'une direction d'allongement de la microstructure allongée au niveau d'au moins un point d'intérêt de la pièce caractérisé en ce qu'il comprend au moins deux étapes successives de mesure d'intensité comprenant les étapes suivantes :

- une sous-étape de rotation d'un transducteur linéaire dans une pluralité de positions angulaires définissant chacune un angle de rotation autour d'un axe de rotation passant par ledit au moins un point d'intérêt, ledit transducteur linéaire s'étendant selon un plan principal et comprenant une pluralité d'éléments transducteurs alignés le long d'une direction principale dudit transducteur linéaire,
- une sous-étape d'émission d'une pluralité de faisceaux ultrasonores élémentaires à chaque position angulaire par chacun de ladite pluralité d'éléments transducteurs en direction dudit point d'intérêt,
- une sous-étape de mesure par chacun de ladite pluralité d'éléments transducteurs de l'intensité à chaque position angulaire d'une pluralité de signaux rétrodiffusés résultant de la rétrodiffusion des faisceaux ultrasonores élémentaires par ladite microstructure allongé,

une première étape de mesure d'intensité permettant l'obtention d'une première série d'intensités mesurées selon un première axe de rotation, et une deuxième étape de mesure d'intensité permettant l'obtention d'une deuxième série d'intensités mesurées selon un deuxième axe de rotation différent du premier axe de rotation, et en ce que le procédé comprend une étape de combinaison de la première série d'intensités mesurées et de la deuxième série d'intensité mesurées de sorte à déterminer la direction d'allongement de la microstructure audit au moins un point d'intérêt, et une étape de cartographie attribuant à chaque point la direction d'allongement déterminée audit point.

Un procédé de cartographie selon l'invention permet donc de déterminer l'allongement de la microstructure sans procéder à des étapes destructives de la pièce. En outre, le procédé de cartographie selon l'invention n'effectue pas seulement un balayage de toute la pièce mais effectue au moins deux mesures d'intensités de signaux rétrodiffusés pour chaque point d'intérêt de sorte à déterminer plus précisément la direction d'allongement (aussi appelée direction d'élongation). En particulier, dans l'art antérieur, la direction d'allongement était mesurée une seule fois par point d'intérêt et cette direction d'allongement ne correspondait pas à la vraie direction d'allongement puisque la mesure ne permettait de déterminer qu'une direction parallèle à la direction principale qui correspond en réalité à une projection de la vraie direction d'allongement sur un plan parallèle au plan principal du transducteur linéaire.

La cartographie de la pièce permet d'améliorer la détection de pièce défectueuse, à la fois en amont par la connaissance générale des directions d'allongement de la pièce permettant de mieux la caractériser, et en aval en permettant de déterminer des conditions de validité d'une pièce cartographiée pour décider si elle est conforme aux exigences de fabrication ou si elle doit être mise au rebut.

Dans l'invention, la deuxième mesure permet de s'approcher de la vraie direction d'allongement par combinaison des deux « projections » de direction d'allongement de chaque mesure.

Lorsqu'on ajoute d'autres mesures selon d'autres axes de rotation, la précision augmente et la direction d'allongement déterminée est d'autant plus proche de la vraie direction d'allongement, mais l'augmentation du nombre de mesure à effectuer et donc le temps pris par ces mesures peut réduire l'intérêt au vu de la précision obtenu avec un nombre faible de mesures. En général, on se contentera de deux ou trois mesures selon deux ou trois axes.

De préférence, l'angle entre le premier axe de rotation et le deuxième axe de rotation est compris entre 20° et 90°.

Le transducteur linéaire est équipé d'éléments transducteurs rectangulaires et est de préférence monté sur un système de translation/rotation permettant de positionner et d'orienter le transducteur en tout point autour de la pièce. Le système de translation/rotation est un système 6 axes (3 translations, 3 rotations).

La pièce à cartographier est plongée dans un fluide permettant la propagation des ondes ultrasonores et des signaux rétrodiffusés.

Les éléments transducteurs sont placés de manière contiguë, par leur plus grand côté. Les éléments transducteurs peuvent être munis de préférence d'une lentille de préfocalisation suivant leur grande dimension afin d'adapter le champ ultrasonore à la courbure de l'interface de la pièce à cartographier. Le transducteur linéaire est utilisé pour focaliser un faisceau ultrasonore en diverses profondeurs au sein de la pièce. Cette focalisation est réalisée de manière électronique en appliquant aux éléments du transducteur linéaire des signaux décalés par une loi de retard permettant de focaliser le faisceau auxdites profondeurs en traversant l'interface fluide-pièce, en particulier aux profondeurs correspondant à la position du point d'intérêt où l'on veut obtenir des mesures d'intensité de signaux rétrodiffusés.

Avantageusement et selon l'invention, le procédé de cartographie comprend en outre une normalisation des intensités mesurées selon une fonction sinusoïdale exprimant l'intensité mesurée en fonction de l'angle de rotation du transducteur, la fonction sinusoïdale présentant notamment comme paramètre une amplitude représentant un indice de confiance de l'allongement, et l'angle à laquelle la fonction sinusoïdale atteint son maximum définit une droite perpendiculaire à la direction d'allongement audit au moins un point d'intérêt selon un plan parallèle au plan principal du transducteur linéaire.

Selon cet aspect de l'invention, la normalisation des intensités mesurées consiste à approximer les intensités mesurées sous la forme d'une fonction sinusoïdale, en particulier une fonction sinus, dans laquelle certains paramètres permettent de caractériser la direction d'allongement mesurée par cette mesure (qui est la direction d'allongement projetée comme exprimée précédemment et pas la vraie direction d'allongement).

En particulier! la fonction f(x) sinusoïdale peut par exemple s'exprimer sous la forme suivante :

$$f(x) = E \, \cos(w(x - x0)) + d$$

avec E l'indice de confiance de l'allongement, xO l'angle à laquelle la fonction sinusoïdale atteint son maximum, et w et d des variables d'ajustement.

Les paramètres E et xO sont utilisables pour calculer facilement la combinaison des séries d'intensités mesurées. En particulier, ces paramètres E et x0 permettent respectivement de déterminer la norme et la direction du vecteur représentant la projection de la vraie direction d'allongement sur le plan parallèle au plan principal du transducteur linéaire lors de la mesure.

Avantageusement et selon l'invention, la direction d'allongement de la microstructure est déterminée pour une pluralité de points d'intérêt réparti sur la pièce et en ce qu'il comprend une étape de cartographie 3D de la pièce associant à chaque point d'intérêt sa direction d'allongement dans une représentation 3D de la pièce.

Selon cet aspect de l'invention, si de nombreux points représentatifs de la pièce sont utilisés comme points d'intérêt, on obtient une cartographie 3D globale de la pièce permettant par exemple d'obtenir une représentation 3D de la pièce avec une vision de toutes les directions d'allongement. La connaissance de toutes les directions d'allongement permet de mieux connaitre la microstructure allongée de la pièce.

La sélection des points d'intérêt peut être optimisée pour minimiser le temps d'inspection et la quantité de données à enregistrer. Par ailleurs, les mesures de deux séries d'intensités selon des axes différents pour le même point d'intérêt peuvent ne pas être effectuées directement successivement, mais une première mesure peut être faite pour chaque point d'intérêt dans un premier temps pour obtenir une première série d'intensités mesurées pour chaque point d'intérêt, puis une deuxième mesure peut être faite pour chaque point d'intérêt dans un deuxième temps pour obtenir une deuxième série d'intensités mesurées pour chaque point d'intérêt. La combinaison des séries d'intensités mesurées peut s'effectuer pour chaque point d'intérêt dès que le nombre de série pour ce point est suffisant.

Avantageusement et selon l'invention, le procédé de cartographie comprend une étape de détermination de dimensions réelles de grains de la microstructure allongée audit point d'intérêt, ladite étape comprenant :

- une étape de calcul de modèles d'intensité rétrodiffusée selon une relation mathématique prédéterminée, chaque modèle étant calculé avec ladite relation mathématique en prenant pour paramètres des dimensions différentes des grains de la microstructure allongé,

- une étape de comparaison d'une des séries d'intensités mesurées avec lesdits modèles d'intensité, les dimensions réelles des grains de la microstructure allongée correspondants aux dimensions utilisées comme paramètre avec le modèle d'intensité rétrodiffusé le plus proche de la série d'intensités mesurées.

Selon cet aspect de l'invention, il est ainsi possible de déterminer les dimensions de la microstructure allongé au point d'intérêt, en comparant l'intensité mesurée à des modèles exprimés selon des dimensions utilisés comme paramètres. La comparaison des courbes obtenus permet de déterminer les courbes les plus proches et ainsi de déduire les dimensions de la microstructure allongé grâce au modèle associé à la courbe la plus proche des valeurs expérimentales.

L'étape de comparaison peut être effectuée automatiquement par un algorithme d'optimisation ou manuellement en réglant chaque dimension utilisée comme paramètre pour ajuster la courbe du modèle à la courbe expérimentale de la série d'intensités mesurées.

Avantageusement et selon ce dernier aspect de l'invention, la relation mathématique prédéterminée s'écrit sous la forme :

$$I(\theta) = \frac{1}{N} \sum_{i=1}^{N} \frac{2\pi(2a)^2(2b)^2}{L_x L_y} f^{x_1^i x_2^i} \left( \frac{A_i}{L_x} \cos(\theta) \right.$$
$$\left. - \frac{B_i}{L_y} \sin(\theta) \right) g^{y_1^i, y_2^i} \left( \frac{A_i}{L_x} \sin(\theta) + \frac{B_i}{L_y} \cos(\theta) \right)$$

avec N un nombre entier, le plus grand possible (généralement 100000 en pratique voire plus afin d'assurer un calcul correct de l'expression) et :

$$f^{x_1^i x_2^i}(u) = \Pi^a(x_1 - u)\Pi^a(x_2 - u)$$

$$g^{y_1^i, y_2^i}(v) = \exp\left( -\frac{j\pi f}{Dc_1 + Lc_2}, (y_1 - v)^2 \right) \text{sinC}\left( \frac{2\pi}{\lambda z}(y_1 \right.$$
$$\left. - v)b \right) \exp\left( -\frac{j\pi f}{Dc_1 + Lc_2}, (y_2 - v)^2 \right) \text{sinC}\left( \frac{2\pi}{\lambda z}(y_2 - v)b \right)$$

avec a la largeur d'un élément transducteur du transducteur linéaire, b la hauteur de l'élément transducteur, D la distance entre le transducteur linéaire et la pièce, L la distance entre le point d'entrée des faisceaux et le point d'intérêt, c1 la célérité dans le milieu de propagation des faisceaux entre le transducteur linéaire et la pièce, c2 la célérité dans la pièce en tant que milieu de propagation des faisceaux, f la fréquence des faisceaux ultrasonores, $\theta$ la position angulaire de la sonde, sinC la fonction sin(x)/x, Lx et Ly les dimensions caractéristiques de la microstructure allongée et Ai et Bi des nombres aléatoires tirés dans une distribution normale centrée réduite, $x_1^i$, $x_2^i$, $y_1^i$, $y_2^i$ des nombres aléatoires tirés dans une distribution uniforme sur les domaines [-a, a] pour $x_1^i$ et $x_2^i$ et [-b, b] pour $y_1^i$ et $y_2^i$, et $\Pi^3$ est une fonction porte de largeur a.

Cette relation mathématique permet d'ajuster au mieux les modèles avec la série de mesure d'intensité. Cette relation mathématique est valable pour des transducteurs linéaires comprenant des éléments transducteurs de type linéaire et de dimension du même ordre de grandeur que les dimensions des grains de la microstructure.

L'invention concerne également un dispositif de cartographie non destructif d'une pièce comprenant une microstructure allongée, pour la détermination d'une direction d'allongement de la microstructure allongée au niveau d'au moins un point d'intérêt de la pièce caractérisé en ce qu'il comprend :

- un transducteur linéaire s'étendant selon un plan principal et comprenant une pluralité d'éléments transducteurs alignés le long d'une direction principale dudit transducteur linéaire,
- des moyens de mise en rotation du transducteur linéaire dans une pluralité de positions angulaires définissant chacune un angle de rotation autour d'un axe de rotation passant par ledit au moins un point d'intérêt,

- des moyens d'émission d'une pluralité de faisceaux ultrasonores élémentaires à chaque position angulaire par chacun de ladite pluralité d'éléments transducteurs en direction dudit point d'intérêt,
- des moyens de mesure par chacun de ladite pluralité d'éléments transducteurs de l'intensité à chaque position angulaire d'une pluralité de signaux rétrodiffusés résultant de la rétrodiffusion des faisceaux ultrasonores élémentaires par ladite microstructure allongé,

lesdits moyens de mise en rotation, moyens d'émission et moyens de mesure étant configuré pour obtenir une première série d'intensités mesurées selon un première axe de rotation, et une deuxième série d'intensités mesurées selon un deuxième axe de rotation différent du premier axe de rotation,
le dispositif de cartographie comprenant en outre des moyens de combinaison de la première série d'intensités mesurées et de la deuxième série d'intensité mesurées de sorte à déterminer la direction d'allongement de la microstructure audit au moins un point d'intérêt.

Avantageusement, le dispositif de cartographie selon l'invention met en œuvre le procédé de cartographie selon l'invention.

Avantageusement, le procédé de cartographie selon l'invention est mis en œuvre par le dispositif de cartographie selon l'invention.

L'invention concerne également un procédé de cartographie et un dispositif de cartographie caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique d'un dispositif de cartographie selon un mode de réalisation de l'invention,
- la figure 2 est une vue schématique d'une portion d'un dispositif de cartographie selon un mode de réalisation de l'invention,
- la figure 3 est une vue schématique d'une cartographie non-destructive selon un procédé de cartographie selon un mode de réalisation de l'invention,
- la figure 4 est une courbe d'intensité de signaux rétrodiffusés en fonction de l'angle du transducteur linéaire lors de la mise en œuvre d'un procédé de cartographie selon un mode de réalisation de l'invention,
- la figure 5 est une vue schématique d'une première étape d'une cartographie non-destructive selon un procédé de cartographie selon un mode de réalisation de l'invention,
- la figure 6 est une vue schématique d'une deuxième étape d'une cartographie non-destructive selon un procédé de cartographie selon un mode de réalisation de l'invention,
- la figure 7 est une vue schématique d'une étape de mesure d'intensité d'un procédé de cartographie selon un mode de réalisation de l'invention,
- la figure 8 est une vue schématique d'un procédé de cartographie selon un mode

de réalisation de l'invention.

## 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

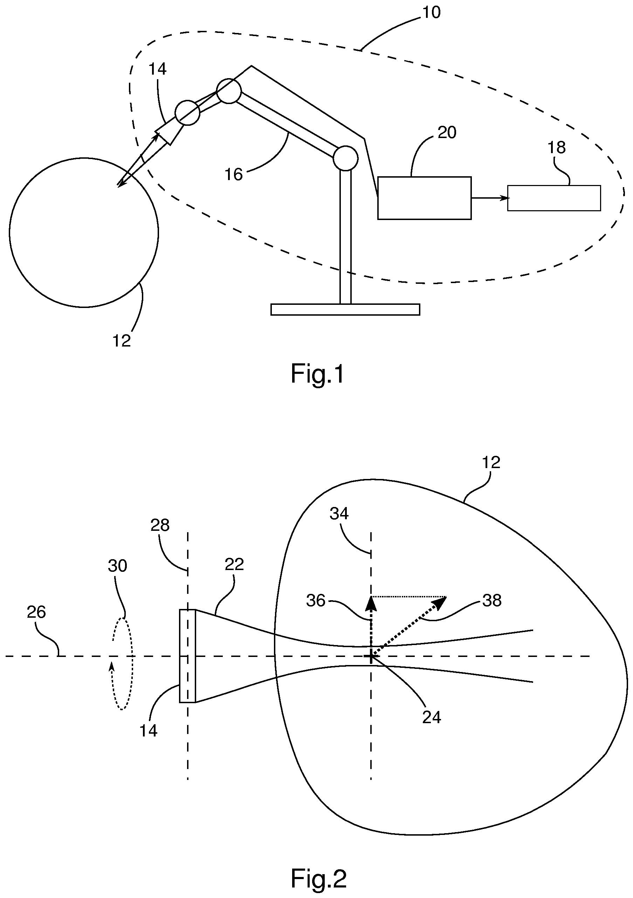

La figure 1 représente schématiquement un dispositif 10 de cartographie selon un mode de réalisation de l'invention, permettant une cartographie et un contrôle non destructif d'une pièce 12, pour la détermination d'une direction d'allongement de la microstructure allongée au niveau d'au moins un point d'intérêt de la pièce 12.

Le dispositif 10 de cartographie comprend un transducteur 14 linéaire comprenant une pluralité d'éléments transducteurs alignés le long d'une direction principale dudit transducteur linéaire, disposé sur des moyens 16 de mise en rotation dudit transducteur 14 linéaire, ici un bras robotisé de type 6 axes.

Les éléments transducteurs permettent l'émission d'une pluralité de faisceaux ultrasonores élémentaires en direction de la pièce. Les faisceaux ultrasonores sont rétrodiffusés sur le transducteur 14 linéaire et celui-ci permet la mesure de l'intensité de ces signaux. Les intensités mesurées sont transmises à un ordinateur 18 pour sauvegarde et traitement, éventuellement après amplification par un amplificateur 20. L'ordinateur 18 comprend des moyens de mise en rotation du transducteur 14 linéaire, des moyens d'émission d'une pluralité de faisceaux ultrasonores élémentaires, des moyens de mesure et des moyens de combinaison permettant de mettre en œuvre le procédé de cartographie décrit plus bas.

La figure 2 représente schématiquement une portion d'un dispositif de cartographie selon un mode de réalisation de l'invention. En particulier, seul le transducteur 14 linéaire et la pièce 12 sont représentés.

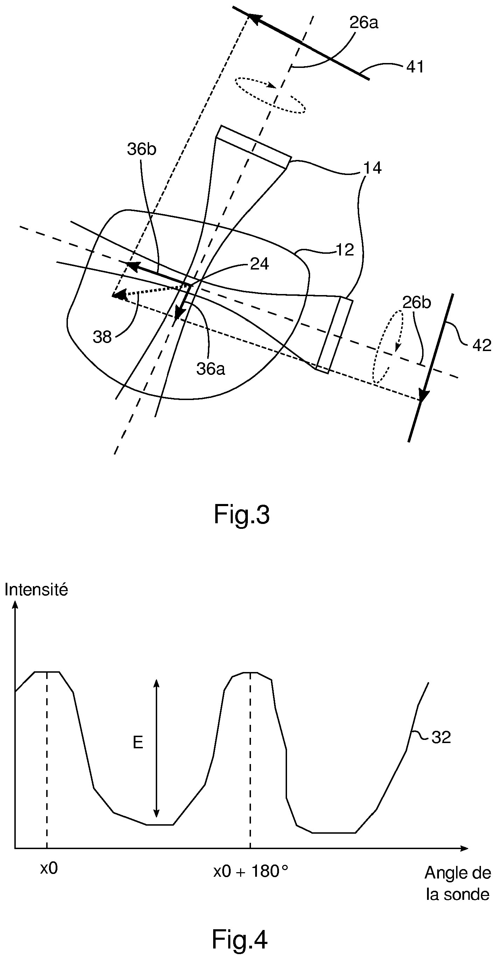

Le transducteur 14 linéaire émet la pluralité de faisceaux 22 ultrasonores élémentaires à chaque position angulaire via chacun de la pluralité d'éléments transducteurs en direction d'un point 24 d'intérêt de la pièce. Un seul point d'intérêt est représenté sur cette figure (et sur la figure 3) mais l'objectif est de reproduire les mesures énoncées ici sur une pluralité de points d'intérêts de sorte à définir la microstructure allongée de la pièce. La pluralité de faisceaux 22 ultrasonore est focalisée vers un point de focalisation confondu avec le point 24 d'intérêt pris en considération lors de la mesure d'intensité.

Pour déterminer la direction d'allongement de la microstructure allongée, le transducteur 14 linéaire est disposé perpendiculairement à un axe 26 de rotation et selon un plan 28 principal.

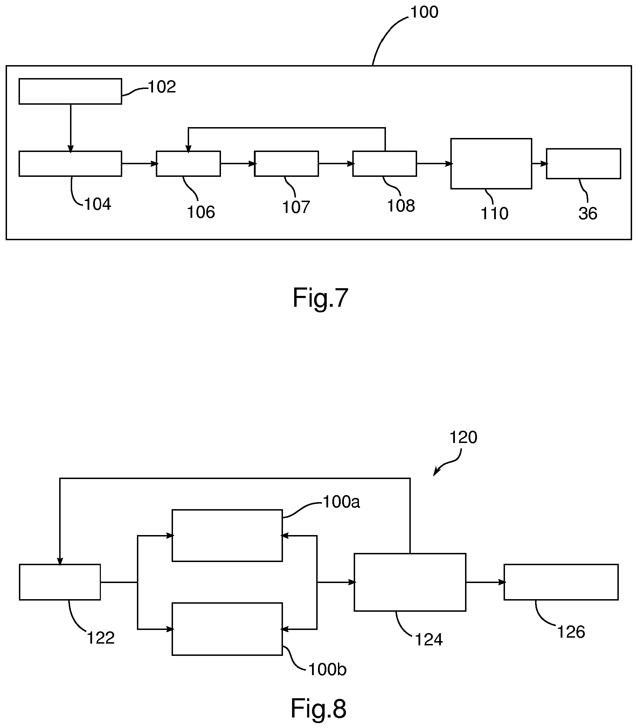

La mesure d'intensité s'effectue selon une étape de mesure d'intensité d'un procédé de cartographie une étape 100 de mesure d'intensité d'un procédé de cartographie selon un mode de réalisation de l'invention, représentée schématiquement à la figure 7.

L'étape de mesure comprend une sous-étape de détermination 102 du point 24 d'intérêt, notamment de ses coordonnées. Le transducteur 14 linéaire est positionné de sorte à ce que l'axe 26 de rotation passe par le point 24 d'intérêt dans une étape 104 de positionnement du transducteur linéaire.

L'étape de mesure comprend ensuite sous-étape 106 d'émission de la pluralité de faisceaux 22 ultrasonores élémentaires par chacun de ladite pluralité d'éléments transducteurs en direction dudit point 24 d'intérêt, dans laquelle la pluralité de faisceaux sont focalisés sur le point 24 d'intérêt.

Ensuite, une sous-étape 107 de mesure par chacun de ladite pluralité d'éléments transducteurs de l'intensité à chaque position angulaire d'une pluralité de signaux rétrodiffusés résultant de la rétrodiffusion des faisceaux ultrasonores élémentaires par ladite microstructure allongé permet de récupérer les mesures d'intensité.

Une sous-étape 108 de rotation du transducteur linéaire autour de l'axe de rotation (représentée aussi par la flèche 30 sur la figure 2) permet de modifier la position angulaire définissant un angle de rotation autour de l'axe 26 de rotation.

Les sous-étapes d'émission, de mesure et de rotation ont lieu pour toutes les positions angulaires prédéfinies auxquelles on souhaite obtenir une mesure.

Les mesures permettent l'obtention d'une courbe d'intensité de signaux rétrodiffusés en fonction de l'angle du transducteur linéaire lors de la mise en œuvre d'un procédé de cartographie selon un mode de réalisation de l'invention! comme représenté sur la figure 4.

La courbe 32 présente un profil périodique et a un maximum d'intensité pour un angle noté xO. L'amplitude de la courbe est notée E et correspond en outre à un indice de confiance de l'allongement : si celui-ci est proche de 0, cela signifie qu'il n'existe pas ou très peu d'allongement (la courbe est plate ou presque), s'il est proche de 1, cela signifie que la confiance sur l'existence d'un allongement est très grande. L'angle x0 pour lequel l'intensité de signaux rétrodiffusés reçu est au maximum correspond à une direction orthogonale à la direction d'allongement que cette étape permet de mesurer. L'angle pour lequel l'intensité de signaux rétrodiffusés reçu est au minimum correspond quant à lui à une direction parallèle à direction d'allongement que cette étape permet de mesurer. Pour faciliter le traitement de la courbe et réduire le risque de mesures erronées, la courbe peut-être normalisée sous la forme d'une fonction sinusoïdale s'exprimant de la façon suivante :

$$f(x) = E \cos(w(x - x0)) + d$$

avec w et d des variables d'ajustement pour obtenir la courbe désirée se rapprochant au mieux des mesures effectuées.

La direction d'allongement mesurée est toujours dans un plan 34 parallèle au plan 28 principal du transducteur 14 linéaire. Ainsi, comme représenté figure 2, la direction 36 d'allongement mesurée est une projection sur le plan parallèle au plan principal de la vraie direction 38 d'allongement qui ne peut donc pas être déterminé directement. La direction projetée est déterminée dans une sous-étape 110 de détermination de la direction projetée, réalisée par l'ordinateur 18, et permet d'obtenir la direction projetée en un point.

La figure 3 représente schématiquement une cartographie non-destructive selon un procédé de cartographie selon un mode de réalisation de l'invention, permettant de déterminer une direction d'allongement plus proche de la vraie direction d'allongement.

Pour ce faire, l'étape de mesure est réalisée selon deux axes de rotation par le transducteur 14 linéaire, un premier axe 26a de rotation et un deuxième axe 26b de rotation différents, se croisant au point 24 d'intérêt et permettant la détermination de deux directions 36a et 36b d'allongement projetés sur des plans différents. La combinaison de ces deux directions projetées permet d'obtenir une direction 38 d'allongement proche de la vraie direction d'allongement. Des étapes de mesure supplémentaires selon d'autres axes de rotation peuvent permettre d'approcher encore la vraie direction d'allongement, par exemple une mesure selon un troisième axe de rotation orthogonal au plan formé par le premier et le deuxième axe de rotation et passant par le point d'intérêt.

La combinaison des deux directions projetées se fait par le calcul suivant :

Soit :

- V : la direction de la vraie direction d'allongement décrite par un vecteur dans une base canonique (x, y, z). Le sens de V n'est pas important et ne sera pas déterminé par la suite.
- k1 et k2, les vecteurs correspondant à la direction vers laquelle pointe le transducteur 14 linéaire.

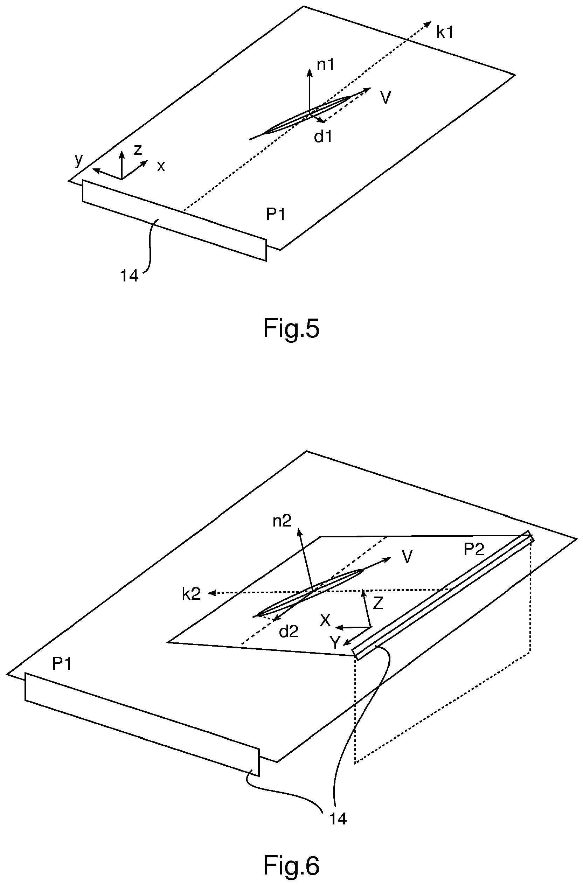

La première étape consiste à déterminer un premier vecteur projeté correspondant à une première direction d'allongement comme visible sur la figure 5. Le transducteur linéaire est orienté suivant le vecteur k1 correspondant au premier axe de rotation et tourne autour de cet axe. Le minimum d'intensité mesuré en fonction de l'angle du transducteur linéaire correspond au vecteur d1, représentant la direction d'allongement projetée de la microstructure (le sens de ce vecteur sera également arbitraire).

Le repère orthonormé (x, y, z) peut être choisi pour que le vecteur k1 soit colinéaire à x et et que le point visé corresponde au centre du repère aux coordonnées (0,0,0), et que l'axe « y » soit colinéaire à d1. Les vecteurs k1 et d1 s'expriment alors de la manière suivante :

$$k1 = \begin{pmatrix} 1 \\ 0 \\ 0 \end{pmatrix} \text{ et } d1 = \begin{pmatrix} 0 \\ E1 \\ 0 \end{pmatrix}$$

Avec E1 l'indice de confiance déterminé lors de l'ajustement de la courbe 32 intensité-angle normalisée et correspondant à l'amplitude de cette courbe 32 (comme décrit précédemment).

Le plan P1 (défini par les deux vecteurs (k1, d1)) contient la direction d'allongement. On note n1 le vecteur normal à ce plan, et s'écrit comme :

$$n1 = cross(k1, d1)$$

(avec la fonction cross correspondant au produit vectoriel entre les deux vecteurs k1 et d1).

L'équation du plan P1 est :

$$\begin{pmatrix} x \\ y \\ z \end{pmatrix} . n1 = 0$$

Les composantes de n1 s'écrivent:

$$n1 = \begin{pmatrix} 0 \\ 0 \\ E1 \end{pmatrix}$$

Alors l'équation du plan P1 est :

$$E1\,z = 0$$

k1 est colinéaire à x et d1 colinéaire à y, ainsi, n1 est colinéaire à z et les bases (x,y,z) et (k1, d1, n1) sont confondues.

Si E1 vaut 0, alors soit le milieu ne présente pas d'allongement, soit la direction d'allongement est confondue avec k1.

Une fois ce premier plan déterminé, le transducteur 14 linéaire est déplacé pour pointer dans la direction représentée par le vecteur k2 correspondant au deuxième axe de rotation, comme représenté sur la figure 6. En appliquant une seconde fois la méthode de mesure d'intensité en fonction de l'angle du transducteur 14 linéaire, on détermine le vecteur d2 correspondant au minimum d'intensité.

Le vecteur k2 s'exprime dans le (x,y,z) en utilisant la rotation par les angles d'Euler $\psi$, $\theta$ et $\phi$ déterminés par l'utilisateur pour positionner le transducteur linéaire suivant k2. Cet ensemble de trois rotations permet de définir le repère orthonormé (X,Y,Z) dont le vecteur X est colinéaire à k2 et Y à d2.

Les angles d'Euler sont définis à la fois par l'orientation du transducteur linéaire et la direction d'allongement projetée.

Dans le repère (X,Y,Z), les vecteurs k2 et d2 s'expriment comme :

$$k2 = \begin{pmatrix} 1 \\ 0 \\ 0 \end{pmatrix}$$

$$d2 = \begin{pmatrix} 0 \\ E2 \\ 0 \end{pmatrix}$$

Avec E2 l'indice de confiance déterminé lors de l'ajustement de la courbe intensité-angle normalisée.

Les vecteurs k2 et d2 peuvent ensuite s'exprimer dans la base (x,y,z) en utilisant la multiplication matricielle suivante :

$$k2(O\,x, y, z) = P\ k2(O\,X, Y, Z)$$

Avec :

$$P = \begin{pmatrix} \cos(\psi)\cos(\varphi) - \sin(\psi)\cos(\theta)\sin(\varphi) & -\cos(\psi)\sin(\varphi) - \sin(\psi)\cos(\theta)\cos(\varphi) & \sin(\psi)\sin(\theta) \\ \sin(\psi)\cos(\varphi) + \cos(\psi)\cos(\theta)\sin(\varphi) & -\sin(\psi)\sin(\varphi) + \cos(\psi)\cos(\theta)\cos(\varphi) & -\cos(\psi)\sin(\theta) \\ \sin(\theta)\sin(\varphi) & \sin(\theta)\cos(\varphi) & \cos(\theta) \end{pmatrix}$$

On définit le vecteur normal au plan P2 par n2 = cross(k2, d2) dans le repère (x,y,z) et l'équation du plan P2 par :

$$\begin{pmatrix} x \\ y \\ z \end{pmatrix} . n2 = 0$$

Admettons que les composantes de n2 s'écrivent :

$$n2 = \begin{pmatrix} e \\ f \\ g \end{pmatrix}$$

Alors l'équation du plan P2 est:

$$e\,x + f\,y + gz = 0$$

La direction d'allongement vraie de la microstructure correspond à l'intersection des plans P1 et P2, ce qui revient à résoudre le système d'équation :

$$\begin{cases} E_1\,z = 0 \\ e\,x + f\,y + gz = 0 \end{cases}$$

Ce système d'équation est une droite dans l'espace. La direction du vecteur V est confondue avec cette droite. Le sens du vecteur V est inutile car non-existant physiquement.

La figure 8 représente schématiquement un procédé 120 de cartographie selon un mode de réalisation de l'invention. Pour chaque point d'intérêt que l'on veut étudier, on prend les coordonnées de ce point dans une première étape 122 de positionnement, puis on effectue au moins deux étapes 100a et 100b de mesure d'intensité selon des axes de rotation différents comme expliqué précédemment. Le résultat de ces deux mesures est utilisé dans une étape 124 de combinaison de la première série d'intensités mesurées et de la deuxième série d'intensité mesurées de sorte à déterminer la direction d'allongement de la microstructure audit point d'intérêt. Le calcul permettant la combinaison a été décrit précédemment.

Les étapes de positionnement, de mesure et de combinaison sont répétées pour chaque point d'intérêt.

Lorsque l'on dispose d'une pluralité de points d'intérêt et des directions d'allongement déterminés pour chaque point d'intérêt, le procédé peut mettre en œuvre une étape 126 de cartographie 3D de la pièce associant à chaque point d'intérêt sa direction d'allongement dans une représentation 3D de la pièce.

## Revendications

1. Procédé de cartographie non-destructif d'une pièce (12) comprenant une microstructure allongée, pour la détermination d'une direction d'allongement de la microstructure allongée au niveau d'au moins un point (24) d'intérêt de la pièce **caractérisé en ce qu'**il comprend au moins deux étapes (104, 104a, 104b) successives de mesure d'intensité comprenant les étapes suivantes :

   - une sous-étape (108) de rotation d'un transducteur (14) linéaire dans une pluralité de positions angulaires définissant chacune un angle de rotation autour d'un axe (26, 26a, 26b) de rotation passant par ledit au moins un point (24) d'intérêt, ledit transducteur (14) linéaire s'étendant selon un plan (28) principal et comprenant une pluralité d'éléments transducteurs alignés le long d'une direction principale dudit transducteur (14) linéaire,
   - une sous-étape (106) d'émission d'une pluralité de faisceaux (22) ultrasonores élémentaires à chaque position angulaire par chacun de ladite pluralité d'éléments transducteurs en direction dudit point (24) d'intérêt,
   - une sous-étape (107) de mesure par chacun de ladite pluralité d'éléments transducteurs de l'intensité à chaque position angulaire d'une pluralité de signaux rétrodiffusés résultant de la rétrodiffusion des faisceaux ultrasonores élémentaires par ladite microstructure allongé,

   une première étape de mesure d'intensité permettant l'obtention d'une première série d'intensités mesurées selon un première axe (26a) de rotation, et une deuxième étape de mesure d'intensité permettant l'obtention d'une deuxième série d'intensités mesurées selon un deuxième axe (26b) de rotation différent du premier axe (26a) de rotation, et **en ce que** le procédé comprend une étape (124) de combinaison de la première série d'intensités mesurées et de la deuxième série d'intensité mesurées de sorte à déterminer la direction d'allongement de la microstructure audit au moins un point (24) d'intérêt, et une étape de cartographie attribuant à chaque point la direction d'allongement déterminée audit point (24).

2. Procédé de cartographie non-destructif selon la revendication 1, **caractérisé en ce que** la sous-étape d'émission comprend une focalisation des faisceaux ultrasonores élémentaires au niveau d'un point de focalisation correspondant audit au moins un point (24) d'intérêt.

3. Procédé de cartographie non-destructif selon l'une des revendications 1 ou 2, **caractérisé en ce que** la sous-étape de mesure de l'intensité comprend en outre une normalisation des intensités mesurées selon une fonction sinusoïdale exprimant l'intensité mesurée en fonction de l'angle de rotation du transducteur, la fonction sinusoïdale présentant notamment comme paramètre une amplitude représentant un indice (E) de confiance de l'allongement, et l'angle (x0) à laquelle la fonction sinusoïdale atteint son maximum définit une droite perpendiculaire à la direction d'allongement audit au moins un point d'intérêt selon un plan parallèle au plan principal du transducteur linéaire.

4. Procédé de cartographie non-destructif selon l'une des revendications 1 à 3, **caractérisé en ce que** la direction d'allongement de la microstructure est déterminée pour une pluralité de points d'intérêt réparti sur la pièce et **en ce qu'**il comprend une étape de cartographie 3D de la pièce associant à chaque point d'intérêt sa direction d'allongement dans une représentation 3D de la pièce.

5. Procédé de cartographie non-destructif selon l'une des revendications 1 à 4, **caractérisé en ce que** l'angle entre le premier axe (26a) de rotation et le deuxième axe (26b) de rotation est compris entre 20° et 90°.

**6.** Procédé de cartographie non-destructif selon l'une des revendications 1 à 5, **caractérisé en ce qu'**il comprend une étape de détermination de dimensions réelles de grains de la microstructure allongée audit point d'intérêt, ladite étape comprenant :

une étape de calcul de modèles d'intensité rétrodiffusée selon une relation mathématique prédéterminée, chaque modèle étant calculé avec ladite relation mathématique en prenant pour paramètres des dimensions différentes des grains de la microstructure allongé,
- une étape de comparaison d'une des séries d'intensités mesurées avec lesdits modèles d'intensité, les dimensions réelles des grains de la microstructure allongée correspondants aux dimensions utilisées comme paramètre avec le modèle d'intensité rétrodiffusé le plus proche de la série d'intensités mesurées.

**7.** Procédé de cartographie non-destructif selon la revendication 6, **caractérisé en ce que** la relation mathématique prédéterminée s'écrit sous la forme :

$$I(\theta) = \frac{1}{N} \sum_{i=1}^{N} \frac{2\pi(2a)^2(2b)^2}{L_x L_y} f^{x_1^i, x_2^i} \left( \frac{A_i}{L_x} \cos(\theta) \right.$$
$$\left. - \frac{B_i}{L_y} \sin(\theta) \right) g^{y_1^i, y_2^i} \left( \frac{A_i}{L_x} \sin(\theta) + \frac{B_i}{L_y} \cos(\theta) \right)$$

avec *N* un nombre entier de préférence supérieur à 100000 et :

$$f^{x_1^i, x_2^i}(u) = \Pi^a(x_1 - u)\Pi^a(x_2 - u)$$

$$g^{y_1^i, y_2^i}(v) = \exp\left( -\frac{j\pi f}{Dc_1 + Lc_2}, (y_1 - v)^2 \right) \operatorname{sinC}\left( \frac{2\pi}{\lambda Z}(y_1 \right.$$
$$\left. - v)b \right) \exp\left( -\frac{j\pi f}{Dc_1 + Lc_2}, (y_2 - v)^2 \right) \operatorname{sinC}\left( \frac{2\pi}{\lambda Z}(y_2 - v)b \right)$$

avec a la largeur d'un élément transducteur du transducteur linéaire, b la hauteur de l'élément transducteur, D la distance entre le transducteur linéaire et la pièce, L la distance entre le point d'entrée des faisceaux et le point d'intérêt, c1 la célérité dans le milieu de propagation des faisceaux entre le transducteur linéaire et la pièce, c2 la célérité dans la pièce en tant que milieu de propagation des faisceaux, f la fréquence des faisceaux ultrasonores, θ la position angulaire de la sonde, sinC la fonction sin{x)/x, $L_x$ et $L_y$ les dimensions caractéristiques de la microstructure allongée et Ai et Bi des nombres aléatoires tirés dans une distribution normale centrée réduite, $x_1^i$, $x_2^i$, $y_1^i$, $y_2^i$ des nombres aléatoires tirés dans une distribution uniforme sur les domaines [-a, a] pour $x_1^i$ et $x_2^i$ et [-b, b] pour $y_1^i$ et $y_2^i$, et $\Pi^a$ est une fonction porte de largeur a.

**8.** Dispositif de cartographie non destructif d'une pièce (12) comprenant une microstructure allongée, pour la détermination d'une direction d'allongement de la microstructure allongée au niveau d'au moins un point (24) d'intérêt de la pièce **caractérisé en ce qu'**il comprend :

- un transducteur (14) linéaire s'étendant selon un plan (28) principal et comprenant une pluralité d'éléments transducteurs alignés le long d'une direction principale dudit transducteur (14) linéaire,
- des moyens de mise en rotation du transducteur linéaire dans une pluralité de positions angulaires définissant chacune un angle de rotation autour d'un axe (26, 26a, 26b) de rotation passant par ledit au moins un point (24) d'intérêt,
- des moyens d'émission d'une pluralité de faisceaux (22) ultrasonores élémentaires à chaque position angulaire par chacun de ladite pluralité d'éléments transducteurs en direction dudit point (24) d'intérêt,
- des moyens de mesure par chacun de ladite pluralité d'éléments transducteurs de l'intensité à chaque position angulaire d'une pluralité de signaux rétrodiffusés résultant de la rétrodiffusion des faisceaux ultrasonores élémentaires par ladite microstructure allongé,

lesdits moyens de mise en rotation, moyens d'émission et moyens de mesure étant configuré pour obtenir une première série d'intensités mesurées selon un première axe (26a) de rotation, et une deuxième série d'intensités mesurées selon un deuxième axe (26b) de rotation différent du premier axe (26a) de rotation,
le dispositif de cartographie comprenant en outre des moyens de combinaison de la première série d'intensités mesurées et de la deuxième série d'intensité mesurées de sorte à déterminer la direction d'allongement de la microstructure audit au moins un point (24) d'intérêt.

**Patentansprüche**

1. Verfahren zur zerstörungsfreien Kartographie eines Teils (12), umfassend eine gedehnte Mikrostruktur, für die Bestimmung einer Dehnungsrichtung der gedehnten Mikrostruktur auf dem Niveau von mindestens einem Punkt (24) von Interesse des Teils, **dadurch gekennzeichnet, dass** es mindestens zwei aufeinander folgende Schritte (104, 104a, 104b) der Intensitätsmessung umfasst, umfassend die folgenden Schritte:

   - einen Unterschritt (108) der Drehung eines linearen Transducers (14) in eine Vielzahl von Winkelpositionen, die jeweils einen Drehwinkel um eine Drehachse (26, 26a, 26b) definieren, die durch den mindestens einen Punkt (24) von Interesse hindurch verläuft, wobei sich der lineare Transducer (14) entlang einer Hauptebene (28) erstreckt und eine Vielzahl entlang der Länge einer Hauptrichtung des linearen Transducers (14) ausgerichteten Transducerelementen umfasst,
   - einen Unterschritt (106) der Emission einer Vielzahl von elementaren Ultraschallstrahlen (22) an jeder Winkelposition durch jedes der Vielzahl von Transducerelementen in Richtung des Punkts (24) von Interesse,
   - einen Unterschritt (107) des Messens, durch jede der Vielzahl von Transducerelementen, der Intensität einer Vielzahl von rückgestreuten Signalen an jeder Winkelposition, die aus der Rückstreuung von elementaren Ultraschallstrahlen durch die gedehnte Mikrostruktur resultieren,

   wobei ein erster Schritt der Intensitätsmessung den Erhalt einer ersten Reihe gemäß einer ersten Drehachse (26a) gemessener Intensitäten erlaubt, und ein zweiter Schritt der Intensitätsmessung den Erhalt einer zweiten Reihe gemäß einer zweiten Drehachse (26b) gemessener Intensitäten erlaubt, die sich von der ersten Drehachse (26a) unterscheidet,
   und dadurch, dass das Verfahren einen Schritt (124) der Kombination der ersten Reihe von gemessenen Intensitäten und der zweiten Reihe von gemessener Intensität derart umfasst, um die Dehnungsrichtung der Mikrostruktur an dem mindestens einen Punkt (24) von Interesse zu bestimmen, und einen Schritt der Kartographie, der jedem Punkt die an dem Punkt (24) bestimmte Dehnungsrichtung zuweist.

2. Verfahren zur zerstörungsfreien Kartographie nach Anspruch 1, **dadurch gekennzeichnet, dass** der Unterschritt der Emission eine Fokussierung der elementaren Ultraschallstrahlen auf dem Niveau eines dem mindestens einen Punkt (24) von Interesse entsprechenden Brennpunkts umfasst.

3. Verfahren zur zerstörungsfreien Kartographie nach Anspruch 1 oder 2, **dadurch gekennzeichnet, dass** der Unterschritt der Intensitätsmessung weiter eine Normalisierung der gemessenen Intensitäten gemäß einer sinusförmigen Funktion umfasst, die die gemessene Intensität in Abhängigkeit des Drehwinkels des Transducers ausdrückt, wobei die sinusförmige Funktion als Parameter insbesondere eine Amplitude aufweist, die einen Konfidenzindex (E) der Dehnung darstellt, und wobei der Winkel (x0), bei dem die sinusförmige Funktion ihr Maximum erreicht, eine zu der Dehnungsrichtung an dem mindestens einen Punkt von Interesse gemäß einer Ebene parallel zu der Hauptebene des linearen Transducers senkrechte Gerade definiert.

4. Verfahren zur zerstörungsfreien Kartographie nach Anspruch 1 bis 3, **dadurch gekennzeichnet, dass** die Dehnungsrichtung der Mikrostruktur für eine Vielzahl von auf dem Teil verteilten Punkten von Interesse bestimmt wird, und dadurch, dass es einen Schritt der 3D-Kartographie des Teils umfasst, der in einer 3D-Darstellung des Teils jeden Punkt von Interesse mit seiner Dehnungsrichtung assoziiert.

5. Verfahren zur zerstörungsfreien Kartographie nach einem der Ansprüche 1 bis 4, **dadurch gekennzeichnet, dass** der Winkel zwischen der ersten Drehachse (26a) und der zweiten Drehachse (26b) zwischen 20° und 90° liegt.

**6.** Verfahren zur zerstörungsfreien Kartographie nach einem der Ansprüche 1 bis 5, **dadurch gekennzeichnet, dass** es einen Schritt der Bestimmung von realen Abmessungen der Körnungen der gedehnten Mikrostruktur am Punkt von Interesse umfasst, wobei der Schritt umfasst:

- einen Schritt des Berechnens von Modellen rückgestreuter Intensität gemäß einer vorher festgelegten mathematischen Beziehung, wobei jedes Modell mit der mathematischen Beziehung berechnet wird, indem die unterschiedlichen Abmessungen der Körnungen der gedehnten Mikrostruktur als Parameter genommen werden,
- einen Schritt des Vergleichens einer der Reihen gemessener Intensitäten mit den Intensitätsmodellen, wobei die realen Abmessungen der Körnungen der gedehnten Mikrostruktur den als Parameter mit dem Modell rückgestreuter Intensität genutzten Abmessungen entsprechen, das der Reihe gemessener Intensitäten am nächsten liegt.

**7.** Verfahren zur zerstörungsfreien Kartographie nach Anspruch 6, **dadurch gekennzeichnet, dass** die vorher festgelegte mathematische Beziehung geschrieben wird in der Form:

$$I(\theta) = \frac{1}{N} \sum_{i=1}^{N} \frac{2\pi(2a)^2(2b)^2}{L_x L_y} f^{x_1^i, x_2^i}\left(\frac{A_i}{L_x}\cos(\theta)\right.$$

$$\left. - \frac{B_i}{L_y}\sin(\theta)\right) g^{y_1^i, y_2^i}\left(\frac{A_i}{L_x}\sin(\theta) + \frac{B_i}{L_y}\cos(\theta)\right)$$

wobei *N* eine ganze Zahl ist, vorzugsweise größer als 100.000, und:

$$f^{x_1^i, x_2^i}(u) = \Pi^a(x_1 - u)\Pi^a(x_2 - u)$$

$$g^{y_1^i, y_2^i}(v) = \exp\left(-\frac{j\pi f}{Dc_1 + Lc_2}, (y_1 - v)^2\right) \sinC\left(\frac{2\pi}{\lambda}\frac{}{z}(y_1\right.$$

$$\left. - v)b\right) \exp\left(-\frac{j\pi f}{Dc_1 + Lc_2}, (y_2 - v)^2\right) \sinC\left(\frac{2\pi}{\lambda}\frac{}{z}(y_2 - v)b\right)$$

wobei a die Breite eines Transducerelements des linearen Transducers, b die Höhe des Transducerelements, D der Abstand zwischen dem linearen Transducer und dem Teil, L der Abstand zwischen dem Eintrittspunkt der Strahlen und dem Punkt von Interesse, c1 die Ausbreitungsgeschwindigkeit in dem Ausbreitungsmilieu der Strahlen zwischen dem linearen Transducer und dem Teil, c2 die Ausbreitungsgeschwindigkeit in dem Teil als Ausbreitungsmilieu der Strahlen, f die Frequenz der Ultraschallstrahlen, $\Theta$ die Winkelposition der Sonde, sinC die Funktion $\sin(x)/x$, $L_x$ und $L_y$ die charakteristischen Abmessungen der gedehnten Mikrostruktur und Ai und Bi aus einer zentrierten, reduzierten Normalverteilung gezogene Zufallszahlen, $x_1^i$, $x_2^i$, $y_1^i$, $y_2^i$ in einer gleichförmigen Verteilung auf den Domänen [-a, a] für $x_1^i$ und $x_2^i$ und [-b, b] für $y_1^i$ und $y_2^i$, gezogene Zufallszahlen sind und $\Pi^a$ eine Türfunktion der Breite a ist.

**8.** Vorrichtung zur zerstörungsfreien Kartographie eines Teils (12), umfassend eine gedehnte Mikrostruktur, für die Bestimmung einer Dehnungsrichtung der gedehnten Mikrostruktur auf dem Niveau von mindestens einem Punkt (24) von Interesse des Teils, **dadurch gekennzeichnet, dass** es umfasst:

- einen linearen Transducer (14), der sich gemäß einer Hauptebene (28) erstreckt und eine Vielzahl entlang einer Hauptrichtung des linearen Transducers (14) ausgerichteten Transducerelementen umfasst,
- Mittel, um den linearen Transducer in einer Vielzahl von Winkelpositionen in Drehung zu versetzen, die jeweils einen Drehwinkel um eine Drehachse (26, 26a, 26b) definieren, die durch den mindestens einen Punkt (24) von Interesse hindurchgeht,
- Mittel zur Emission einer Vielzahl von elementaren Ultraschallstrahlen (22) an jeder Winkelposition durch jedes der Vielzahl von Transducerelementen in Richtung des Punkts (24) von Interesse,
- Mittel zum Messen, durch jedes der Vielzahl von Transducerelementen, der Intensität einer Vielzahl von rückgestreuten Signalen an jeder Winkelposition, die aus der Rückstreuung von elementaren Ultraschallstrahlen durch die gedehnte Mikrostruktur resultieren,

wobei die Mittel zum Versetzen in Drehung, Mittel zur Emission und Mittel zum Messen konfiguriert sind, um eine erste Reihe von Intensitäten, gemessen gemäß einer ersten Drehachse (26a), und eine zweite Reihe von Intensitäten, gemessen gemäß einer zweiten Drehachse (26b), die sich von der ersten Drehachse (26a) unterscheidet, zu erhalten,
wobei die Kartographievorrichtung weiter Mittel zur Kombination der ersten Reihe gemessener Intensitäten und der zweiten Reihe gemessener Intensität derart umfasst, um die Dehnungsrichtung der Mikrostruktur an dem mindestens einen Punkt (24) von Interesse zu bestimmen.

## Claims

1. Method for the non-destructive mapping of a component (12) comprising an elongated microstructure, to determine an elongation direction of the elongated microstructure at at least one point (24) of interest of the component, **characterised in that** it comprises at least two successive intensity measurement steps (104, 104a, 104b) comprising the following steps:

   - a sub-step (108) of rotating a linear transducer (14) in a plurality of angular positions each defining an angle of rotation about an axis (26, 26a, 26b) of rotation passing through said at least one point (24) of interest, said linear transducer (14) extending along a main plane (28) and comprising a plurality of transducer elements aligned along a main direction of said linear transducer (14),
   - a sub-step (106) of emitting a plurality of elementary ultrasonic beams (22) at each angular position by each of said plurality of transducer elements in the direction of said point (24) of interest,
   - a sub-step (107) of measuring by each of said plurality of transducer elements of the intensity at each angular position of a plurality of backscattered signals resulting from the backscattering of the elementary ultrasonic beams by said elongated microstructure,

   a first intensity measurement step of making it possible to obtain a first series of intensities measured along a first axis (26a) of rotation, and a second intensity measurement step making it possible to obtain a second series of intensities measured along a second axis (26b) of rotation different from the first axis (26a) of rotation,
   and **in that** the method comprises a step (124) of combining the first series of measured intensities and the second series of measured intensities so as to determine the elongation direction of the microstructure at said at least one point (24) of interest and a mapping step attributing at each point, the elongation direction determined at said point (24).

2. Non-destructive mapping method according to claim 1, **characterised in that** the emission sub-step comprises focusing of the elementary ultrasonic beams at a focus point corresponding to said at least one point (24) of interest.

3. Non-destructive mapping method according to one of claims 1 or 2, **characterised in that** the intensity measurement sub-step further comprises a standardisation of the intensities measured according to a sinusoidal function expressing the intensity measured according to the angle of rotation of the transducer, the sinusoidal function having in particular, as a parameter, an amplitude representing a confidence index (E) of the elongation, and the angle (x0) at which the sinusoidal function reaches its maximum defines a straight line perpendicular to the elongation direction at said at least one point of interest along a plane parallel to the main plane of the linear transducer.

4. Non-destructive mapping method according to one of claims 1 to 3, **characterised in that** the elongation direction of the microstructure is determined for a plurality of points of interest distributed on the component and **in that** it comprises a step of 3D mapping of the component associating with each point of interest its elongation direction in a 3D representation of the component.

5. Non-destructive mapping method according to one of claims 1 to 4, **characterised in that** the angle between the first axis (26a) of rotation and the second axis (26b) of rotation is between 20° and 90°.

6. Non-destructive mapping method according to one of claims 1 to 5, **characterised in that** it comprises a step of determining actual dimensions of grains of the elongated microstructure at said point of interest, said step comprising:

- a step of calculating models of backscattered intensity according to a predetermined mathematical relationship, each model being calculated with said mathematical relationship by taking as parameters different dimensions of the grains of the elongated microstructure,
- a step of comparing one of the series of intensities measured with said models of intensity, the actual dimensions of the grains of the elongated microstructure corresponding to the dimensions used as a parameter with the backscattered model of intensity closest to the series of intensities measured.

7. Non-destructive mapping method according to claim 6, **characterised in that** the predetermined mathematical relationship is written in the form:

$$I(\theta) = \frac{1}{N} \sum_{i=1}^{N} \frac{2\pi(2a)^2(2b)^2}{L_x L_y} \, f^{x_1^i, x_2^i}\left(\frac{A_i}{L_x}\cos(\theta) - \frac{B_i}{L_y}\sin(\theta)\right) g^{y_1^i, y_2^i}\left(\frac{A_i}{L_x}\sin(\theta) + \frac{B_i}{L_y}\cos(\theta)\right)$$

with *N* being a whole number, preferably greater than 100,000, and:

$$f^{x_1^i, x_2^i}(u) = \Pi^a(x_1 - u)\Pi^a(x_2 - u)$$

$$g^{y_1^i, y_2^i}(v) = \exp\left(-\frac{j\pi f}{Dc_1 + Lc_2}, (y_1 - v)^2\right)\text{sinC}\left(\frac{2\pi}{\lambda\,z}(y_1\right.$$

$$\left. - v)b\right)\exp\left(-\frac{j\pi f}{Dc_1 + Lc_2}, (y_2 - v)^2\right)\text{sinC}\left(\frac{2\pi}{\lambda\,z}(y_2 - v)b\right)$$

with a being the width of a transducer element of the linear transducer, b the height of the transducer element, D the distance between the linear transducer and the component, L the distance between the entry point of the beams and the point of interest, c1 the celerity in the propagation medium of the beams between the linear transducer and the component, c2 the celerity in the component as propagation medium of the beams, f the frequency of the ultrasonic beams, θ the angular position of the probe, sinC the function sin(x)/x, $L_x$ and $L_y$ the dimensions characteristic of the elongated microstructure and Ai and Bi random numbers drawn in a reduced centred normal distribution, $x_1^i$, $x_2^i$, $y_1^i$, $y_2^i$ random numbers drawn in a uniform distribution on the domains [-a, a] for $x_1^i$ and $x_2^i$ and [-b, b] for $y_1^i$ and $y_2^i$ and $\Pi^a$ is a gate function of width a.

8. Non-destructive mapping device for a component (12) comprising an elongated microstructure, to determine an elongation direction of the elongated microstructure at at least one point (24) of interest of the component, **characterised in that** it comprises:

- a linear transducer (14) extending along a main plane (28) and comprising a plurality of transducer elements aligned along a main direction of said linear transducer (14),
- means for rotating the linear transducer in a plurality of angular positions each defining an angle of rotation about an axis (26, 26a, 26b) of rotation passing through said at least one point (24) of interest,
- means for emitting a plurality of elementary ultrasonic beams (22) at each angular position by each of said plurality of transducer elements in the direction of said point (24) of interest,
- means for measuring by each of said plurality of transducer elements the intensity at each angular position of a plurality of backscattered signals resulting from the backscattering of the elementary ultrasonic beams by said elongated microstructure,

said rotating means, emission means and measuring means being configured to obtain a first series of intensities measured along a first axis (26a) of rotation, and a second series of intensities measured along a second axis (26b) of rotation different from the first axis (26a) of rotation,
the mapping device further comprising means for combining the first series of intensities measured and the second series of intensities measured so as to determine the elongation direction of the microstructure at said at least one point (24) of interest.

Fig.1

Fig.2

Fig.3

Fig.4

Fig.5

Fig.6

Fig.7

Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2594935 A1

- JP 2012247262 A

**Littérature non-brevet citée dans la description**

- **BAELDE AURÉLIEN et al.** Effect of microstructural elongation on backscattered field : Intensity measurement and multiple scattering estimation with a liner transducer array. *ULTRASONICS,* 20 Septembre 2017, vol. 82, 379-389